# EUROPEAN PATENT SPECIFICATION

(11) **EP 2 197 170 B1**
(45) Date of publication and mention of the grant of the patent: **08.02.2012**
(21) Application number: 08305901.4
(22) Date of filing: 09.12.2008
(51) Int. Cl.: H04L 29/06

(54) **VOIP registration backup on VRRP routers**
VOIP-registrierungssicherung auf VRRP-routern
Sauvegarde d'enregistrement par VOIP sur des routeurs VRRP

(43) Date of publication of application: 16.06.2010
(73) Proprietor: Alcatel Lucent, 75007 Paris (FR)
(72) Inventor: Pote, Parag, 560031 Bangalore (IN); Shivakumar, Chetan, 560003 Bangalore (IN)
(74) Representative: Sciaux, Edmond

(56) References cited:
- US-A1- 2006 235 980
- US-A1- 2007 258 456
- KNIGHT S ET AL: "Virtual Router Redundancy Protocol" INTERNET CITATION, [Online] XP002135272 Retrieved from the Internet: URL:ftp://ftp.isi.edu/in-notes/rfc2338.txt > [retrieved on 2000-04-10]

## Description

### BACKGROUND

### Technical Field

The embodiments herein relate to telecommunications, and, more particularly, to enabling Voice over Internet Protocol (VOIP) calls during network disruptions.

### Description of the Related Art

VoIP technology involves transmission of calls over a data network based on Internet Protocol (IP). The communication is in the form of packet data and thus there is no fixed connection as there would be in case of switched networks. Increasing redundancy in a multirouter environment where one router acts as a master and a backup router is held in reserve for use in case of malfunction in the main router or its data links is an important aspect in the present IP networks. A Virtual Router Redundancy Protocol (VRRP) provides a way to have one or more backup (or slave) routers to a master router when using a statically configured router on a Local Area Network (LAN), where the backup routers may take over from the master router when the master router fails in order not to disrupt communication.

In conventional large enterprise VOIP system, a central call processor, for instance, a proxy call server or a soft-switch provides switching intelligence across VoIP network. The communication devices present in the LAN register with the call server by sending REGISTER packets, the call server snoops the information and then stores the information such as user profile, extension numbers, and the like. But the storing of information from REGISTER packets is limited only to the master router, as the packets flow through only the master router. Currently, providing complete VoIP survivability in case of a VRRP switchover is not possible because when a slave router becomes master, the slave does not have information about the registered users. In case of survivability, the master acts as a survivable call server when reachability of the call server is broken as the master router has information of registered users since the REGISTER packets from main call server go through local master router.

In case of VRRP switch over, a slave router takes over as a master router and if immediately the slave enters survivability mode, then the communication devices present in the local network cannot communicate to each other. This is because the slave router does not have information of registered communication devices unless communication devices send REGISTER packets to slave routers.

Furthermore, if expire time for REGISTER packets is set to a big value, then it may take hours for registration with the slave. However, setting short time for register expire increases register traffic in the network in case of large number of phones.
Document US 2006 /0235980 describes an integrated device which operates as a backup call server when external call servers are unavailable.

### SUMMARY

In view of the foregoing, an embodiment herein provides method of providing Voice over IP telecommunication VoIP survivability in a network as described in claim 1, wherein the network comprising a plurality of network devices applying a Virtual Router Redundancy Protocol VRRP, wherein at least one VoIP phone creating registration information and sending the registration information to local call server present in the network and at least one master network device extracting information of the VoIP phone from the registration information is disclosed. The method comprises of a master network device sending the registration information to the plurality of network devices present in the network. The network device can be a router and the VoIP phones register with the call server using REGISTER command. The master network device snoops the registration information and stores information of the VoIP phones locally and uses a specific multicast address for sending the registration information to the plurality of network devices in the network. The addresses of the plurality of network devices are configured in the master network device.

Embodiments further disclose a herein further disclose a network for providing Voice over IP telecommunication (VoIP) survivability in a network as described in claim 6, wherein the network comprising a plurality of network devices applying a Virtual Router Redundancy Protocol VRRP, wherein at least one VoIP phone creating registration information and sending the registration information to call servers present in the network and at least one master network device extracting information of the VoIP phone from the registration information. The system comprises at least one means adapted for sending the registration information to the plurality of network devices present in the network. The network comprises at least one means adapted for snooping the registration information and stores information of the VoIP phones locally. Further, the network comprises at least one means adapted for storing network addresses of the plurality of network devices for forwarding the registration information of the VoIP phones.

These and other aspects of the embodiments herein will be better appreciated and understood when considered in conjunction with the following description and the accompanying drawings.

### BRIEF DESCRIPTION OF THE DRAWINGS

The embodiments herein will be better understood from the following detailed description with reference to the drawings, in which:

FIG. 1 is a block diagram illustrating a network having a master router functioning as local call server providing VoIP survivability, in accordance with the embodiments herein;

FIG. 2 is a block diagram illustrating a network wherein a master router snooping REGISTER packets from users for providing VoIP survivability, in accordance with the embodiments herein;

FIG. 3 is a block diagram illustrating a network having multiple routers providing VoIP survivability during a VRRP switchover, in accordance with the embodiments herein;

FIG. 4 is a block diagram illustrating a network having a slave router functioning as a master router providing VoIP survivability, in accordance with the embodiments herein;

FIG. 5 illustrates a flow chart depicting a method of providing VoIP registration backup on VRRP routers for attaining VoIP survivability, in accordance with the embodiments herein; and

FIG. 6 illustrates a flowchart depicting a method of providing continued call survivability when a central call server is unavailable, in accordance with the embodiments herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

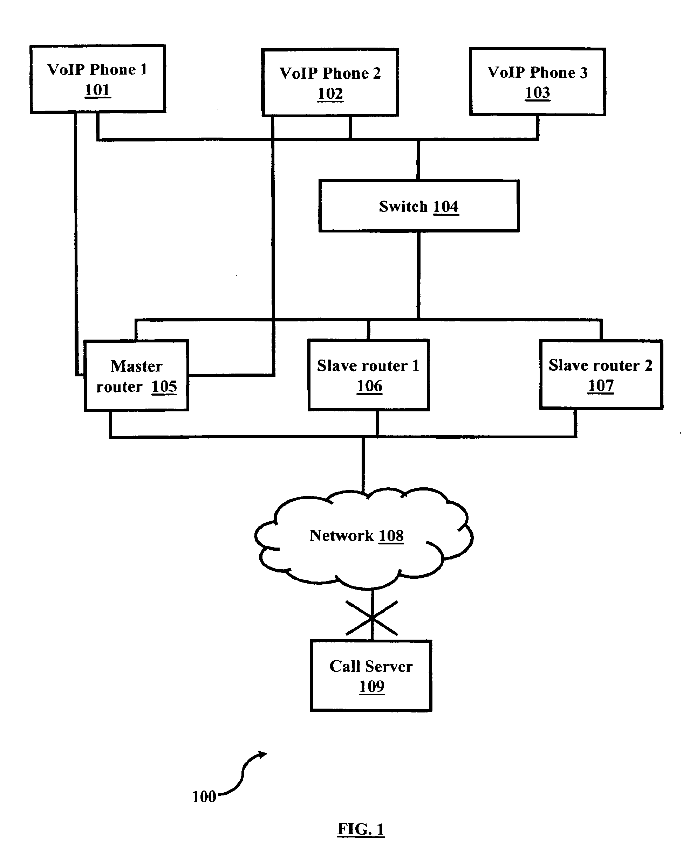

The embodiments herein achieve a method for attaining Voice over Internet Protocol (VoIP) survivability by sending registration information to all routers in the network. Referring now to the drawings, and more particularly to FIGS. 1 through 6, where similar reference characters denote corresponding features consistently throughout the figures, there are shown embodiments.

The embodiment herein discloses a method of providing VoIP survivability in case of a VRRP switch over. VoIP phone registers with the call server by sending a REGISTER packet. The master router locally store information about the user by snooping the REGISTER packet. The master router then sends these REGISTER packets to slave routers, which stores the information and uses the information when any one of the slave routers becomes a master. Master router sends periodic multicast messages to all routers in a group. The message is sent to a particular address and the master router uses the same address to forward REGISTER packets received from phones to slave routers. The method provides complete VoIP survivability, avoids multiple registrations and requires no waiting time.

FIG. 1 is a block diagram illustrating a network having a master router functioning as local call server providing VoIP survivability, in accordance with the embodiments herein. VoIP survivability is the approach of providing local call server facility when the main call server is not reachable. The local call server configured on enterprise router or a local independent call server device takes over to provide voice functionality. The VoIP phones 101, 102, 103 are connected to multiple routers instanced as master router 105, slave router 1 106 and slave router 2 107 in the network through a switch 104. The multiple routers form a VRRP group and one of the routers serve as a gateway for internal network. The VoIP phones 101, 102, 103 convert voice signals to digital data and send the digital data to target phones using IP. Each VoIP phone 101, 102, 103 is provided with access information of a call server for the VoIP phones 101, 102, 103 to register the access information and also to setup call requests when initiating a call towards a phone of interest. The phones 101, 102, 103 send REGISTER packets to main call server 109 and the REGISTER packets passes through local master router 105. The master router 105 snoops the registration information of the phones 101, 102, 103 and stores the information in components such as Random Access Memories (RAM), caches, registers or the like for convenient fast access later. When a call set up request is received from a phone 101, 102, or 103, the master router 105 checks if any call server is available in the network 108. If the call servers are down, then the master router 105 takes over as a local call server as the master router contains information of the registered users and provides complete call server functionality for VoIP call in survivability mode.

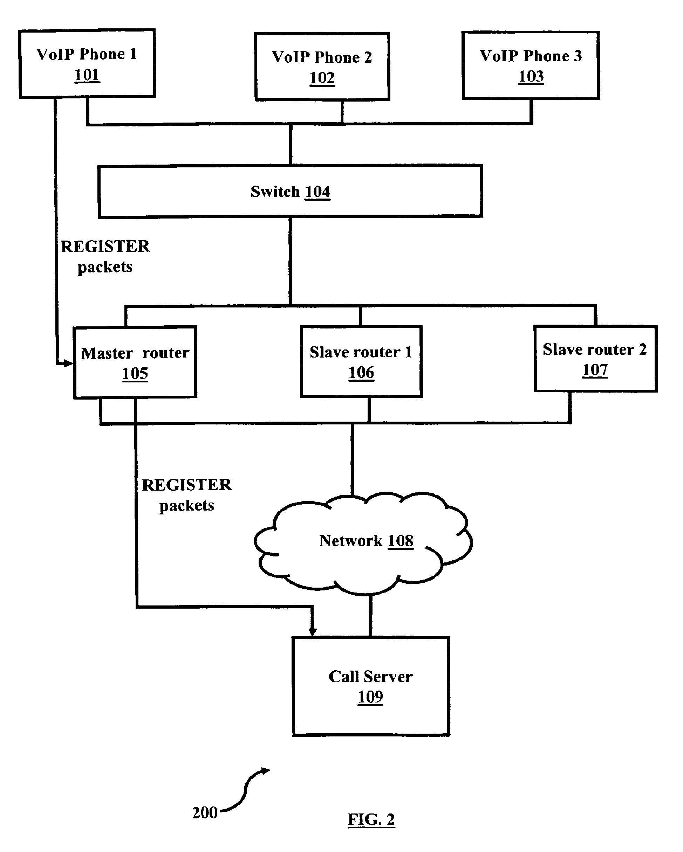

FIG. 2 is a block diagram illustrating a network wherein a master router snooping REGISTER packets from users for providing VoIP survivability, in accordance with the embodiments herein. The VoIP phones 101, 102, 103 register with a local call server 109 by sending REGISTER packets. On phone registration, the call server 109 extract information such as the phone number, extension numbers, expire time and the like and stores the information locally. A local call server (not shown) in master router 105 snoops the REGISTER packets and locally store information about the user. The user information can be stored in components such as Random Access Memories (RAM), caches, registers or the like for convenient fast access later. The information can be stored in the form of a table comprising columns for phone numbers or extension numbers and also the IP address of the phones 101, 102, and 103. Various other parameters such as expiry information are also stored by the master router 105. When master router 105 is in survivability mode, the phones 101,102, and 103 do not suffer any interruption of service as the master router 105 contains information of the users registered with the call server 109.

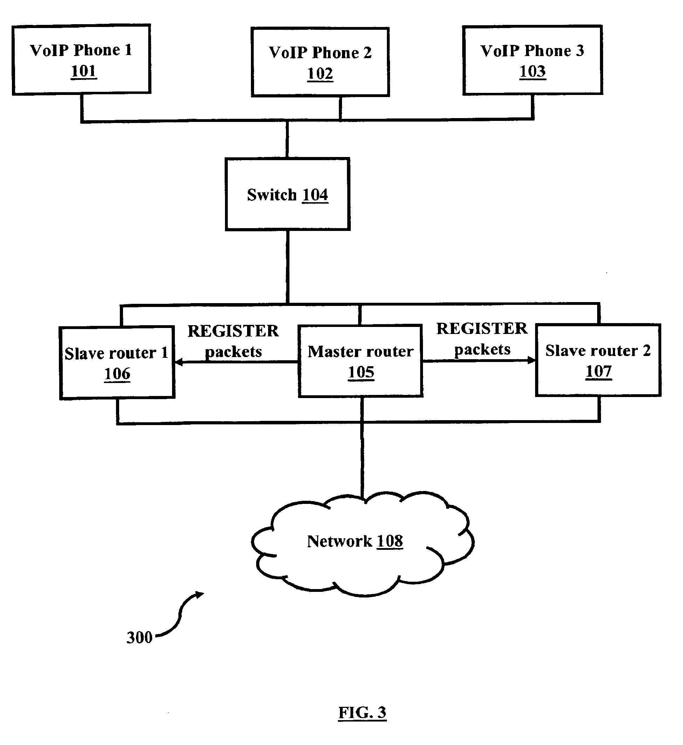

FIG. 3 is a block diagram illustrating a network having multiple routers providing VoIP survivability during a VRRP switchover, in accordance with the embodiments herein. VoIP survivability is the approach of providing local call server facility when the main call server is not reachable. The local call server configured on enterprise router or a local independent call server device takes over to provide voice functionality. The multiple routers form a VRRP group and one of the routers serve as a gateway for internal network. The VoIP phones 101, 102, 103 are connected to multiple routers in the network through a switch 104. The VoIP phones 101, 102, 103 register with a local call server 109 by sending REGISTER packets. On phone registration, the call server 109 extract information such as the phone number, extension numbers, expire time and the like and stores the information locally. A local call server (not shown) in master router 105 snoops the REGISTER packets and locally store information about the user. When master router 105 is in survivability mode, the phones 101,102, and 103 do not suffer any interruption of service as the master router 105 contains information of the users registered with the call server 109. In VRRP, master router 105 sends periodic multicast message to all slave routers, for instance slave router 1 106, slave router 2 107 and the like to check the status of the routers. The messages are sent to specific multicast address. The master router 105 uses the same multicast address to forward the REGISTER packets received from phone to slave router 1 106 and slave router 2 107. The slave router 106 and 107 address can also be configured on master router 105 to send REGISTER packets. On reception of the REGISTER packets, the slave router 1 106 and slave router 2 107 stores the user information and uses the information when the slave router becomes the master. Thus, when master router 105 goes down and slave router 1 106 takes over and acts as master and since the slave 106 includes registration information, the phones 101, 102 and 103 starts working immediately. For example, an enterprise network can be considered where multiple routers form a VRRP group and one of the router serve as a gateway for internal network 108. The internal Local Area Network (LAN) network IP subnet is 10.91.0/24 and VRRP IP is 10.91.0.10. The router IP addresses are 10.91.0.100 for master, 10.91.0.101 for slave router 1, 10.91.0.102 for slave router 2 and IP of call server at head office is 64.201.1.100. The VoIP phones 101, 102 and 103 in 10.91.0.0 network registers with the head office call server 64.201.1.100 by sending SIP REGISTER packets. On reception of the REGISTER packets, the call server 109 extracts phone number, extension, expire time from the register request and stores the information for future use. Simultaneously, a local call server in master router snoops the REGISTER packets to store user information. When master router 105 is in survivability mode, the master router 105 employs information of the users registered with the head office call server and hence phone starts working immediately. Further, when the master router 105 goes down and slave 10.91.0.101 becomes master and immediately after that connection with central call server goes down and box goes to survivability mode. Then if any phone in 10.91.1.0 network tries to call phone in same network, the calls are not connected unless the phones register themselves with local call server. Phones keep sending REGISTER at regular interval and are configurable. But if the register expire time is high, it take long time for the phones to register with local call server. So when phones boot and start sending REGISTER to central call server in head office, the local server may snoop the REGISTER packets and store user information. Furthermore, the master router 10.91.0.100 sends REGISTER packets to all the slaves 10.91.0.101 and 10.91.0.102 with source as phone IP and destination as router IP. The slaves store the register information for use when it becomes a master router. In the embodiment herein, the routers may provide connectivity inside enterprises, between enterprises and the Internet, and inside Internet Service Providers (ISP), for instance, the Cisco CRS-1, Juniper T1600 or the like. The enterprise routers mainly use access routers, distribution routers, and core routers. An access router, including SOHO, is located at customer sites such as branch offices and does not require hierarchical routing of their own. Distribution routers aggregate traffic from multiple access routers, either at the same site, or to collect the data streams from multiple sites to a major enterprise location. In enterprises, core router may provide a base for interconnecting the distribution tier routers from multiple enterprise locations.

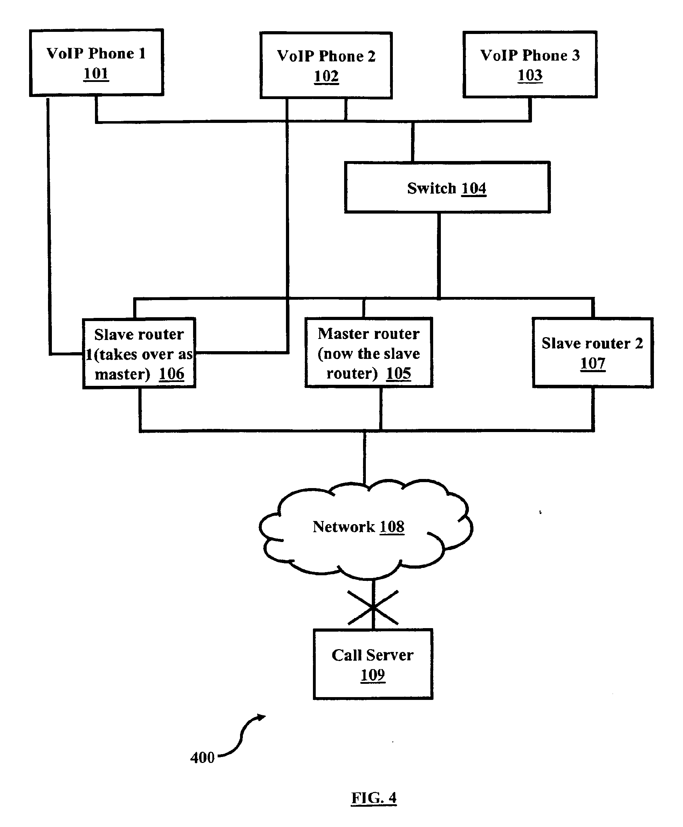

FIG. 4 is a block diagram illustrating a network having a slave router functioning as a master router providing VoIP survivability, in accordance with the embodiments herein. The VoIP phones 101, 102, 103 register with a local call server 109 by sending REGISTER packets. A master router 105 snoops the REGISTER packets from the call server 109 and locally store information about the user. The master router 105 then reconstructs the REGISTER packets and forwards the REGISTER packets to slave router 1 106 and slave router 2 107. The slave routers 106 and 107 on reception of the REGISTER packets store information about the phone for further use. When the call server 109 and master router 105 are down, at least one slave router, slave router 1 106 takes over as a master router. Further, when the router 1 106 enters survivability mode, the phones 101, 102 and 103 in the network starts working immediately as the router 1 106 includes registration information of the user. The router 105 uses multicast address to forward the REGISTER packets received from phone to router 1 106 and router 2 107. The router 106 and 107 address can also be configured on the router 105 to send REGISTER packets.

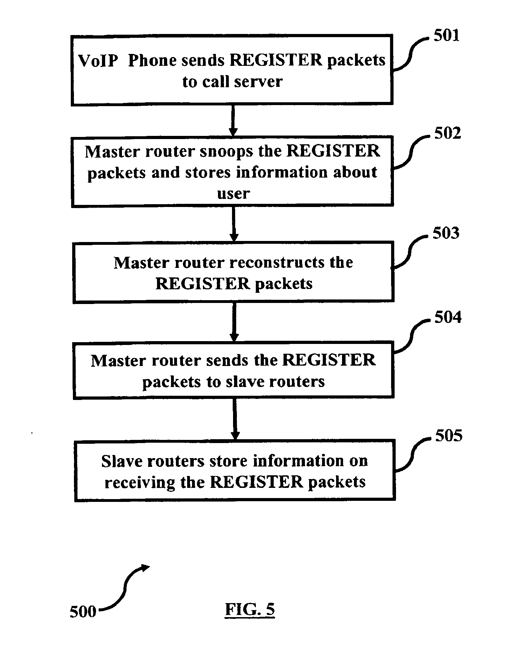

FIG. 5 illustrates a flow chart depicting a method of providing VoIP registration backup on VRRP routers for attaining VoIP survivability, in accordance with the embodiments herein. The VoIP phones 101, 102, and 103 register with the call server 109 by sending (501) REGISTER packets. A master router 105 in the network snoops (502) the REGISTER packet and stores information about the user locally. The master router 105 saves the multicast address of the slave routers 106 and 107 used for sending periodic multicast messages to check the status of the routers in the group. The same multicast address is used by the master router 105 to forward the REGISTER packets received from phones 101/102/103. The master router 105 reconstruct (503) the REGISTER packets and sends (504) the packets to slave router 106/107 with source as phone IP and destination as multicast IP. On receiving the REGISTER packets, the slave routers 106, 107 stores (505) the user information received from the master router 105. Further, the slave router 106, 107 uses the information to provide VoIP support when the master router 105 goes down and slave routers 106, 107 become master. The various actions in method 500 may be performed in the order presented, in a different order or simultaneously. Further, in some embodiments, some actions listed in FIG. 5 may be omitted.

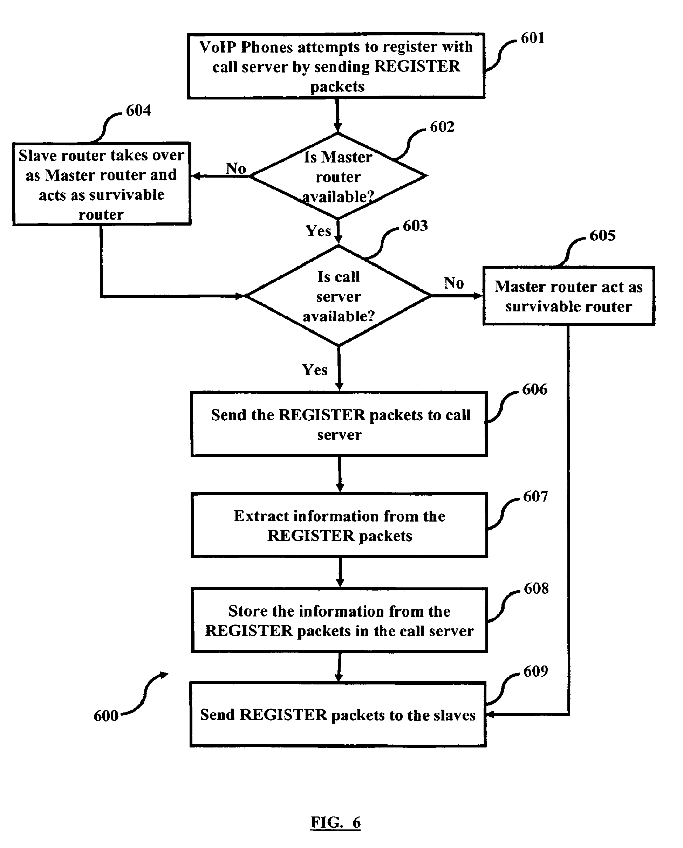

FIG. 6 illustrates a flowchart depicting a method of providing continued call survivability when a central call server is unavailable, in accordance with the embodiments herein. The VoIP phones 101, 102, 103 present in the LAN attempts to register (601) with call server 109 by sending REGISTER packets. On the VoIP phones in the LAN attempting to register, a check (602) is performed to check if the master router 105 is available. If the master router 105 is not available, then the slave router (106, 107) takes (604) over as master router 105. If the master router 105 is available, then a further check (603) is performed to check if the call server 109 is available. If the call server 109 is not available, then the slave router which is now the master router 105 acts (605) as the survivable router. If the call server 109 is available, then the REGISTER packets are sent (606) to the call server 109. The call server 109 extracts (607) information from the REGISTER packets, snoops the information and stores (608) the information in the local call server. The information in the REGISTER packets is further sent (609) to the slave routers. The various actions in method 600 may be performed in the order presented, in a different order or simultaneously. Further, in some embodiments, some actions listed in FIG. 6 may be omitted.

The embodiment also provides complete VoIP survivability. When VRRP switchover happens, one of the slave router acts as a master router and immediately goes to survivability, VoIP phones present locally can communicate as the slaves are provided with the registration information. Further, the embodiment eliminates waiting time since all slave routers contains shared registration information.

In the embodiments disclosed herein REGISTER packets can be sent from master router to slave routers by configuring the slave router addresses on the master or the master sending REGISTER packets individually to all slave routers.

The embodiments disclosed herein can be implemented through at least one software program running on at least one hardware device and performing network management functions to control the network elements. The network elements shown in Fig. 1 include blocks which can be at least one of a hardware device, a software module or a combination of hardware device and software module.

The embodiment disclosed herein specifies that the VoIP survivability function can be preferably implemented in any VRRP supported routers; however this is not a limitation. The VoIP registration backup can be hosted as a separate entity or in combination with the already existing elements of the network. Therefore, it is understood that the scope of the protection is extended to such a program and in addition to a computer readable means having a message therein, such computer readable storage means contain program code means for implementation of one or more steps of the method, when the program runs on a VRRP router or any suitable programmable device. The method is implemented in a preferred embodiment through or together with a software program written in e.g. Very high speed integrated circuit Hardware Description Language (VHDL) or C, C++, Java, or using another programming language, or implemented by one or more VHDL, C, C++, or Java processes or routines, or several software modules being executed on at least one hardware device. The hardware device can be any kind of device which can be programmed including e.g. any kind of computer like a server or a personal computer, an FPGA, a processor, or the like, or any combination thereof, e.g. one processor and two FPGAs. The device may also include means which could be e.g. hardware means like e.g. an ASIC, or a combination of hardware and software means, e.g. an ASIC and an FPGA, or at least one microprocessor and at least one memory with software modules located therein. Thus, the means are at least one hardware means and/or at least one software means. The method embodiments described herein could be implemented in pure hardware or partly in hardware and partly in software. The device may also include only software means. Alternatively, the invention may be implemented on different hardware devices, e.g. using a plurality of CPUs.

## Claims

1. A method of providing Voice over IP telecommunication, VoIP, survivability in a network, said network comprising a plurality of routers (105, 106, 107) implementing Virtual Router Redundancy Protocol, VRRP, one of these routers (105) being a master router and the others being (106, 107) slave routers at a given time ; **characterized in that** it comprises the steps of:
- at least one VoIP phone (101, 102, 103) creating registration information and sending (501) said registration information to a call server (109) present in said network, via said master router (105),
- said master router (105) extracting (502) information of said VoIP phone (101, 102, 103) from said registration information,
- then said master router (105) sending (504) said registration information to said slave routers (106, 107),
- on reception of said registration information, slave routers (106, 107) storing information,
- and a slave router using stored information when this slave router becomes the master router, when the current master router (105) goes down and this slave router (106) takes over and acts as a new master router.

2. The method, as claimed in claim 1, wherein sending (501) said registration information to a call server (109), via said master router (105), comprises the step of sending a REGISTER command (504).

3. The method as claimed in claim 1, wherein extracting (502) information of said VoIP phone from said registration information, comprises the step of said master router snooping (502) said registration information and storing (505) said registration information locally.

4. The method as claimed in claim 1, wherein sending (504) said registration information to said slave routers (106, 107) comprises the step of using a specific multicast address.

5. The method as claimed in claim 1, further comprising the step of configuring addresses of said slave routers (106, 107) in said master router (105).

6. A network for providing Voice over IP telecommunication, VoIP, survivability, comprising VoIP phones (101, 102, 103), a call server (109), and a plurality of routers applying a Virtual Router Redundancy Protocol, VRRP, one of these routers (105) being a master router and the others being (106, 107) slave routers, at a given time ;
**characterized in that** at least one VoIP phone (101, 102, 103) comprises means for creating registration information and sending (606) said registration information to said call server (109);
**in that** said master router (105) comprises means for extracting (502) said registration information, and means for sending (504) said registration information to said slave routers (106, 107);
**in that** each of said slave routers (106, 107) comprises means for storing information, on reception of said registration information;
and **in that** each of said slave router (106, 107) respectively comprises means for using stored information when this slave router becomes the master router, when the current master router (105) goes down and this slave router (106) takes over and acts as a new master router.

## Patentansprüche

1. Verfahren zur Gewährleistung der Überlebensfähigkeit von Voice-over-IP-Tefekommunikationsverbindungen, VoIP, in einem Netzwerk, wobei das besagte Netzwerk eine Mehrzahl von Routern (105, 106, 107), welche ein virtuelles Router-Redundanz-Protokoll, VRRP, implementieren, umfasst, wobei einer dieser Router (105) ein Master-Router ist und die anderen Router (106, 107) zu einem gegebenen Zeitpunkt Slave-Router sind; **dadurch gekennzeichnet, dass** es die folgenden Schritte umfasst:
- Mindestens ein VoIP-Telefon (101, 102, 103) erstellt eine Registrierungsinformation und sendet (501) die besagte Registrierungsinformation über den besagten Master-Router (105) an einen Call-Server (109), der sich in dem besagten Netzwerk befindet,
- der besagte Master-Router (105) extrahiert (502) die Information des besagten VoIP-Telefons (101, 102, 103) aus der besagten Registrierungsinformation,
- der besagte Master-Router (105) sendet (504) die besagte Registrierungsinformation anschließend an die besagten Slave-Router (106, 107),
- nach Empfang der besagten Registrierungsinformation speichern die Slave-Router (106, 107) die Information,
- und ein Slave-Router verwendet die gespeicherte Information, wenn dieser Slave-Router bei Ausfall des momentanen Master-Routers (105) der Master-Router wird und die Aufgaben als ein neuer Master-Router übernimmt und als solcher fungiert.

2. Verfahren nach Anspruch 1, wobei das Senden (501) der besagten Registrierungsinformation über den besagten Master-Router (105) an einen Call-Server (109) den Schritt des Sendens eines REGISTER-Befehls umfasst (504).

3. Verfahren nach Anspruch 1, wobei das Extrahieren (502) der Information des besagten VoIP-Telefons aus der besagten Registrierungsinformation den Schritt des Snooping (502) der besagten Registrierungsinformation durch den besagten Master-Router und das lokale Speichern (505) der besagten Registrierungsinformation umfasst.

4. Verfahren nach Anspruch 1, wobei das Senden (504) der besagten Registrierungsinformation an die besagten Slave-Router (106, 107) den Schritt des Verwendens einer spezifischen Multicast-Adresse umfasst.

5. Verfahren nach Anspruch 1, weiterhin umfassend den Schritt des Konfigurierens von Adressen des besagten Slave-Routers (106, 107) in dem besagten Master-Router (105).

6. Netzwerk für die Gewährleistung der Überlebensfähigkeit von Voice-over-IP-Telekommunikationsverbindungen, VoIP, umfassend VoIP-Telefone (101, 102, 103), einen Call-Server (109) und eine Mehrzahl von Routern (105, 106, 107), welche ein virtuelles Router-Redundanz-Protokoll, VRRP, anwenden, wobei einer dieser Router (105) ein Master-Router ist und die anderen Router (106, 107) zu einem gegebenen Zeitpunkt Slave-Router sind;
**dadurch gekennzeichnet, dass** mindestens ein VoIP-Telefon (101, 102, 103) Mittel zum Erstellen einer Registrierungsinformation und zum Senden (606) der besagten Registrierungsinformation an den besagten Call-Server (109) umfasst,
dass der besagte Master-Router (105) Mittel zum Extrahieren (502) der besagten Registrierungsinformation und Mittel zum Senden (504) der besagten Registrierungsinformation an die besagten Slave-Router (106, 107) umfasst,
dass ein jeder der besagten Slave-Router (106, 107) Mittel zum Speichern der Information nach Empfang der besagten Registrierungsinformation umfasst,
- und dass ein jeder der besagten Slave-Router (106, 107) jeweils Mittel zum Verwenden der gespeicherten Information, wenn dieser Slave-Router (106) bei Ausfall des momentanen Master-Routers (105) der Master-Router wird und die Aufgaben als ein neuer Master-Router übernimmt und als solcher fungiert, umfasst.

## Revendications

1. Procédé de réalisation de la maintenabilité des télécommunications Voix sur IP, VoIP, dans un réseau, ledit réseau comprenant une pluralité de routeurs (105, 106, 107) qui mettent en oeuvre le protocole de redondance de routeur virtuel, VRRP, l'un de ces routeurs (105) étant un routeur maître et les autres (106, 107) étant des routeurs esclaves à un instant donné ; **caractérisé en ce qu'**il comprend les étapes suivantes :
- au moins un téléphone VoIP (101, 102, 103) crée des informations d'enregistrement et envoie (501) lesdites informations d'enregistrement à un serveur d'appel (109) présent dans ledit réseau, par le biais dudit routeur maître (105),
- ledit routeur maître (105) extrait (502) les informations dudit téléphone VoIP (101, 102, 103) desdites informations d'enregistrement,
- ledit routeur maître (105) envoie (504) ensuite lesdites informations d'enregistrement auxdits routeurs esclaves (106, 107),
- dès réception desdites informations d'enregistrement, les routeurs esclaves (106, 107) stockent les informations,
- et un routeur esclave utilise les informations stockées lorsque ce routeur esclave devient le routeur maître, lorsque le routeur maître actuel (105) s'arrête et ce routeur esclave (106) prend le relais et fait office de nouveau routeur maître.

2. Procédé selon la revendication 1, selon lequel l'envoi (501) desdites informations d'enregistrement à un serveur d'appel (109) par le biais dudit routeur maître (105) comprend l'étape d'envoi d'une commande d'ENREGISTREMENT (504).

3. Procédé selon la revendication 1, selon lequel l'extraction (502) des informations dudit téléphone VoIP desdites informations d'enregistrement comprend l'étape au cours de laquelle ledit routeur maître écoute (502) lesdites informations d'enregistrement et stocke (505) localement lesdites informations d'enregistrement.

4. Procédé selon la revendication 1, selon lequel l'envoi (504) desdites informations d'enregistrement auxdits routeurs esclaves (106, 107) comprend l'étape d'utilisation d'une adresse de multidiffusion spécifique.

5. Procédé selon la revendication 1, comprenant en outre l'étape de configuration des adresses desdits routeurs esclaves (106, 107) dans ledit routeur maître (105).

6. Réseau pour réaliser la maintenabilité des télécommunications Voix sur IP, VoIP, comprenant des téléphones VoIP (101, 102, 103), un serveur d'appel (109) et une pluralité de routeurs (105, 106, 107) qui appliquent un protocole de redondance de routeur virtuel, VRRP, l'un de ces routeurs (105) étant un routeur maître et les autres (106, 107) étant des routeurs esclaves à un instant donné ; **caractérisé en ce qu'**au moins un téléphone VoIP (101, 102, 103) comprend des moyens pour créer des informations d'enregistrement et envoyer (606) lesdites informations d'enregistrement audit serveur d'appel (109) ;
**en ce que** ledit routeur maître (105) comprend des moyens pour extraire (502) lesdites informations d'enregistrement et des moyens pour envoyer (504) lesdites informations d'enregistrement auxdits routeurs esclaves (106, 107) ;
**en ce que** chacun desdits routeurs esclaves (106, 107) comprend des moyens pour stocker les informations dès réception desdites informations d'enregistrement ;
et **en ce que** chacun desdits routeurs esclaves (106, 107) comprend respectivement des moyens pour utiliser les informations stockées lorsque ce routeur esclave devient le routeur maître, lorsque le routeur maître actuel (105) s'arrête et ce routeur esclave (106) prend le relais et fait office de nouveau routeur maître.
